# EUROPEAN PATENT APPLICATION

(11) **EP 4 674 763 A2**
(43) Date of publication of application: **07.01.2026**
(21) Application number: 25187291.7
(22) Date of filing: 03.07.2025
(51) Int. Cl.: B64D 37/30, B64D 37/32, B64D 37/34, F17C 7/04

(54) **LIQUID-HYDROGEN FUEL SYSTEM FOR AN AIRCRAFT**

(30) Priority: 03.07.2024 IN 202411050829
(71) Applicant: Eaton Intelligent Power Limited, Dublin 4 (IE)
(72) Inventor: MASSON, Andrew J., Dublin, D04 Y0C2 (IE); SARKAR, Subrata, Dublin, D04 Y0C2 (IE)
(74) Representative: Jolliffe, Jack Louis

(57) **Abstract**

A fuel system having a hydrogen fuel tank for fueling a fuel feed and propulsion system. The fuel system having a jet pump within the hydrogen fuel tank, at least one primary pump receiving fuel from the jet pump and pressurizing fuel to an outlet path and a first fuel recirculation path configured to selectively recirculate fuel to the hydrogen fuel tank. The first fuel recirculation path is fluidly connected to the outlet path. The first fuel recirculation path includes a heat exchanger positioned within the hydrogen fuel tank to cool fuel received from at least one of the fuel feed system or a tank pressurization system. The heat exchanger and a Joule-Thomson expansion at the jet pump minimizes recirculated fuel temperature, which in combination with a selective flow recirculation rate improve the life of the primary pump downstream.

## Description

### CROSS REFERENCE TO RELATED APPLIATION

This application claims priority to India Application No. 202411050829 titled LIQUID-HYDROGEN FUEL SYSTEM FOR AN AIRCRAFT, filed on July 3, 2024, the disclosure of which is hereby incorporated by reference in its entirety.

### BACKGROUND

Conventional liquid hydrogen fuel pumps have applications in space or rocket propulsion systems. Hydrogen fuel pumps typically have low life capability caused by cavitation erosion when operated due to low Net Positive Suction Head available (NPSHa) from the storage tank. Further, hydrogen fuel systems are generally heavy and difficult to incorporate into aircrafts and are further complicated by the wider range of propulsion fuel flow rates required for aviation applications as opposed to rocket or industrial applications. As such, a need has arisen to improve the life capability and usability of liquid hydrogen fuel pumps.

### SUMMARY

An aspect of the present disclosure relates to a fuel system. The fuel system includes a hydrogen fuel tank for fueling a propulsion system, a heat exchanger immersed within liquid within the hydrogen fuel tank, and a fuel feed system. The fuel feed system includes a jet pump within the hydrogen fuel tank, at least one primary pump receiving fuel from the jet pump and pressurizing fuel to an outlet path, and a first fuel recirculation path fluidly connected from the outlet path to the heat exchanger. The first fuel recirculation path is configured to recirculate fuel through the fuel tank and liquid within the fuel tank to the heat exchanger. The heat exchanger cools fuel received from the first fuel recirculation path and directly supplies the cooled fuel to a first inlet of the jet pump.

An aspect of the present disclosure relates to a tank pressurization system. The tank pressurization system for a fuel system includes a first heat exchanger configured to add pressure to a gas region of a hydrogen fuel tank, a second heat exchanger immersed within liquid fuel in the hydrogen fuel tank; an actuator valve receiving fuel from a fuel feed system. The actuator valve configured to control fuel received from a first fuel recirculation path to the first and second heat exchangers. The fuel feed system including a jet pump within the hydrogen fuel tank, at least one primary pump receiving fuel from the jet pump and pressurizing fuel to an outlet path, a first fuel recirculation path fluidly connected from the outlet path to the inlet of the jet pump, the first fuel recirculation path passes through the fuel tank and the heat exchanger to a first inlet of the jet pump. The heat exchanger immersed in liquid fuel is configured to transfer heat from the fuel of the first recirculation path to the fuel tank and the first fuel recirculation path directly supplies the cooled fuel to the first inlet of the jet pump.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a schematic view of a fuel system of the present disclosure;
FIG. 2 is a schematic view of an alternate embodiment of the fuel system of the present disclosure;
FIG. 3 is a schematic view of a heat exchanger of the fuel system of FIG. 2 positioned at a jet pump.
FIG. 4 is a schematic view of an alternate embodiment of the fuel system of the present disclosure;
FIG. 5 is a schematic view of an alternate embodiment of the fuel system of the present disclosure;
FIG. 6 is a schematic view of an alternate embodiment of the fuel system of the present disclosure;
FIG. 7 is side view of a jet pump of the fuel system of the present disclosure of FIG. 1.

### DETAILED DESCRIPTION

One aspect of the present disclosure is a fuel system utilizing liquid hydrogen fuel to operate a propulsion system for aerospace applications. The fuel system may include a fuel recirculation path which improves the pressure available for a jet pump within a hydrogen fuel tank. The jet pump is able to pump fuel to a primary pump. Additionally, the increased pressure at the jet pump enables a reduction of size in the primary pump. As such, the fuel system operates with improved efficiency and reduced size, mass, and power consumption of the primary pump. In some instances, the primary pump may be a centrifugal pump utilizing the pressure generated by the jet pump. By increasing pressure at the inlet of the centrifugal pump and decreasing temperature of the fuel, cavitation erosion is reduced within the centrifugal pump, and the centrifugal pump has an increased life cycle.

Another aspect of the present disclosure is the combination of the fuel recirculation path and a tank pressurization system. The fuel recirculation path may be fluidly connected through the tank pressurization system to recirculate fuel to the tank through the tank pressurization system. By utilizing a single fuel recirculation path, the fuel system is simplified. Further, by recirculating fuel through the tank pressurization system, weight of the system is reduced overall by eliminating the need for multiple fluid paths.

The present application is described in detail hereinafter by means of exemplary embodiments with reference to the accompanying drawings. In the several drawings, similar reference numerals indicate similar parts and components. The following detailed description of the present application is for explanation only and is by no means intended to limit the present application and the applications or usages thereof. The embodiments described in this specification are not exhaustive but are only some of a number of possible embodiments. The exemplary embodiments may be implemented in many different forms and should not be construed as limiting the scope of the present application. In some exemplary embodiments, well-known processes, well known device structures, and well-known technologies may not be described in detail.

It should be understood that various embodiments may include similar parts. Certain previously explained parts in this patent application may exist in alternate embodiments and the alternate embodiments may utilize similar reference characters. These parts will not be redescribed to avoid unnecessary repetition and to maintain clarity and conciseness.

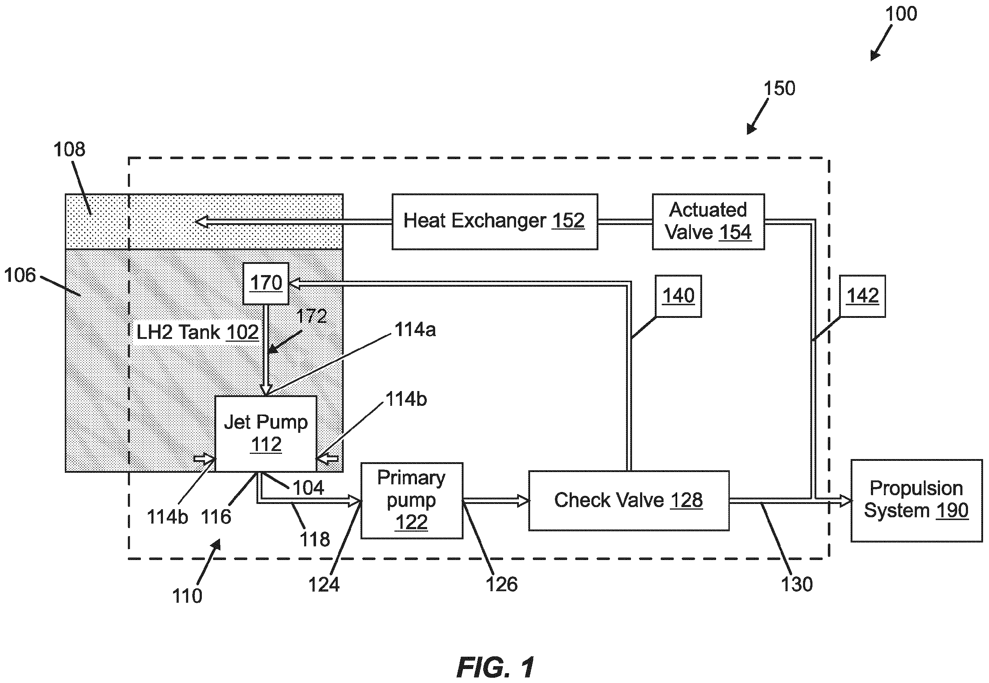

FIG. 1 is a schematic of fuel system of the present disclosure. The fuel system includes a hydrogen fuel tank 102 for fueling a propulsion system 190, a fuel feed system 110, and a heat exchanger7. The hydrogen fuel tank retains fuel for fueling a propulsion system. The heat exchanger 170 is immersed within liquid fuel in the hydrogen fuel tank 102. The heat exchanger 170 is configured to cool fuel which is recirculated back to the fuel tank 102. The fuel feed system 110 includes a jet pump 112 within the hydrogen fuel tank 102, at least one primary pump 122 receiving fuel from the jet pump 112 and pressurizing fuel to an outlet path 130, and a first fuel recirculation path 140 fluidly connected from the outlet path 130 to a first inlet 114a of the jet pump 112. The first fuel recirculation path 140 passes through the fuel tank 102 and heat exchanger 170 to a first inlet 114 of the jet pump 112. The heat exchanger 170 is configured to transfer heat from the fuel of the first fuel recirculation path 140 to the fuel tank 102 and the first fuel recirculation path 140 directly supplies the cooled fuel at a high pressure to the first inlet 114 of the jet pump 112. In some examples, the fuel system 100 may further include a tank pressurization system 150 configured to maintain pressure within the fuel tank 102.

Referring to FIG. 1, the fuel tank 102 may include a tank outlet 104, a liquid region 106, and a gas region 108. The liquid region 106 holding the liquid fuel and the gas region consists of vapor or other gases within the fuel tank 102. The liquid fuel can be liquid hydrogen fuel. In some instances, the gas region is vaporized hydrogen fuel from a tank pressurization system 150. The hydrogen fuel tank 102 may also include a pressure relief valve or check valve to release excess pressure from tank 102. It is understood that a liquid region and gas region can vary based on the amount of liquid fuel in the tank.

The jet pump 112 generates a pressurized flow of fuel to the primary pump 122. The jet pump 112 is positioned within the tank 102 to generate the pressurized flow and is connected to a tank outlet 104. The jet pump 112 includes at least two inlets 114, and the jet pump 112 includes an outlet 116 joined to a tank outlet 104 of the hydrogen fuel tank 102. The tank outlet 104 is fluidly connected by a supply path 118 to the primary pump 122. A first inlet 114a to the jet pump 112 receives fuel from the heat exchanger 170 which has been recirculated from the primary pump 122 as will be described in greater detail later. Second inlets 114b may suction fuel from the hydrogen fuel tank 102 directly for supply of fuel to the jet pump 112. For instance, a housing of the jet pump 112 may include two inlets 114b on the sides of the housing. By pressurizing the fuel supplied to the primary pump 122, the jet pump 112 assists the primary pump 122 in pumping fuel to the propulsion system 190. In some examples. the inlets 114b may be part of a passage of the heat exchanger. In some examples, the jet pump 112 may be an ejector pump or jet pump. Advantageously, the fuel is cooled via the Joule-Thompson effect at the jet pump.

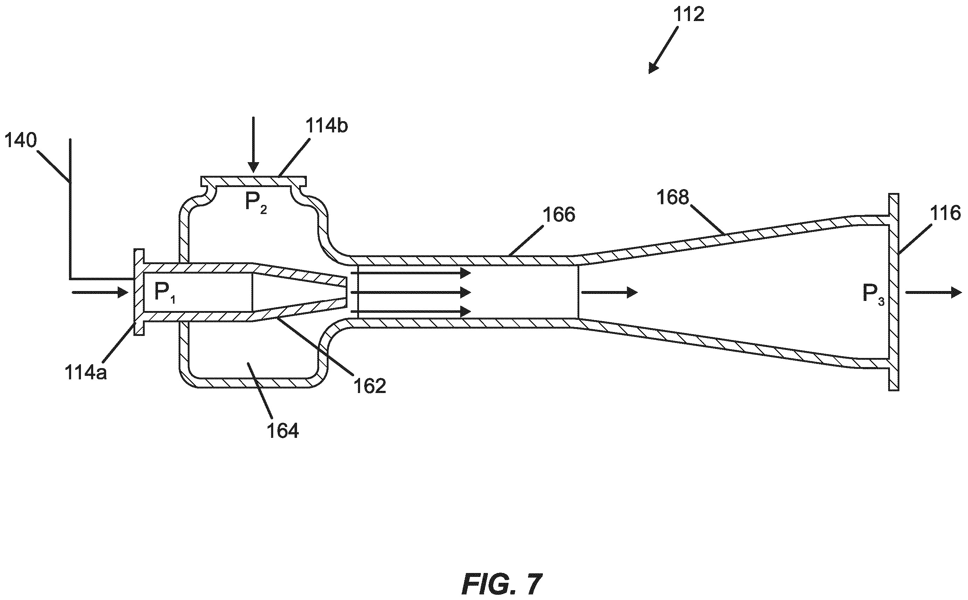

Referring to FIG. 7, the jet pump 112 receives high-pressure fuel at the inlet 114a from the first fuel recirculation path 140. In the example jet pump 112, the high-pressure fuel is supplied via a nozzle 162 to a mixing tube 166 within the jet pump 112. The high-pressure fuel from the first fuel recirculation path 140 may cause fuel to be drawn in from the tank 102 via at least one inlet 114b to a chamber 164. The drawn fuel from the tank 102 is drawn to the mixing tube 166 to form an intermediate pressure fuel after mixing with the high-pressure fuel from the first fuel recirculation path 140. The intermediate pressure fuel proceeds through the mixing tube 166 to a diffuser 168. The mixing and expansion of the combined flows that occurs in the mixing tube 166 and diffuser 168 of the jet pump 112 results in a pressure reduction that is responsible for the Joule-Thomson effect where the temperature changes in the fluid as a result of the pressure reduction.

Referring back to FIG. 1, the at least one primary pump 122 pumps fuel to the outlet path 130. In the example fuel system, a single primary pump is provided. The primary pump 122 can be a centrifugal pump. The primary pump 122 includes an inlet 124, and an outlet 126. The inlet 124 receives fuel from the jet pump 112. The outlet 126 ejects fuel to the outlet path 130. The outlet path 130 includes at least one valve 128 to control the flow rate of fuel between the first fuel recirculation path 140 or a second fuel recirculation path 142 and the propulsion system 190. The at least one valve 128 may be either a check valve or a flow splitting valve. In the example fuel system 100, the valve is a check valve 128 which controls the fuel recirculated to the heat exchanger 170. The recirculation of fuel back to the heat exchanger 170 immersed within the liquid fuel of fuel tank 102 increases pressure within the jet pump 112. The increase in pressure increases the net suction pressure at inlet 124 of the primary pump 122 and reduces cavitation at the impeller of the pump. As such, life expectancy of the primary pump 122 is improved. It should be understood that further components of the fuel feed system 110 may be included upstream of the propulsion system 190.

The tank pressurization system 150 is configured to maintain pressure in the hydrogen fuel tank 102. The tank pressurization system 150 increases pressure within the fuel tank 102 to replace pressure reduced by the supply of fuel to the propulsion system 190. For instance, in the example fuel system 100, the tank pressurization system 150 is connected to the second fuel recirculation path 142. In the example fuel system 100, the second fuel recirculation path 142 is separate from the first path 140. The second fuel recirculation path 142 is positioned between the propulsion system 190 and the first recirculation path 140 on the output path 130. Further, the second fuel recirculation path 142 fluidly branches from the output path 130. The tank pressurization system 150 may include a heat exchanger 152 and an actuator valve 154 controlling fuel flow to the heat exchanger 152 and the heat exchanger 170 within the tank 102. In the example fuel system 100, the heat exchanger 152 and the actuator valve are positioned outside of the tank 102. As fuel is supplied to the propulsion system 190, less fuel is held in tank 102. With less fuel, pressure in the hydrogen fuel tank 102 may drop and need to be maintained. Accordingly, the tank pressurization system 150 operates to maintain the pressure of the tank 102. The heat exchanger 152 may add pressure into the tank 102 by heating fuel from second fuel recirculation path 142 and adding the heated fuel to enter tank 102 as a vapor. The heated fuel maintains pressure of the tank 102. In some examples, the heat exchanger 152 may be a heater which heats the fuel to a vaporized state. In some instances, the heat exchanger 152 may be referred to as a vaporizer and is configured to change the vaporized fuel being recirculated into a gaseous state. In some examples the heat exchanger 152 may include a vaporizing chamber which vaporizes the fuel. The actuator valve 154 selectively controls the recirculation of fuel in the second fuel recirculation path 142 to the heat exchanger 152. In some examples, the fuel system 100 further comprises a controller configured to operate the actuator valve and/or the jet pump 112. In some examples, the fuel tank 102 may further include a check valve to release pressure within the tank 102.

The heat exchanger 170 is positioned within the hydrogen fuel tank 102 and is immersed in the liquid fuel. Fuel may become heated by the operation of the primary pump 122 and is recirculated through the first fuel recirculation path. Fuel from the first fuel recirculation path 140 passes through the heat exchanger 170 and exchanges the heat to the tank 102. Accordingly, the heat exchanger 170 exchanges heat with the liquid fuel in the tank 102. As such, the fuel passing through the heat exchanger 170 is cooled and the temperature of fuel in the tank 102 is minimally increased. The heat exchanger 170 is joined to the inlet 114a of the jet pump 112 by a passage 172. The heat exchanger 170 supplies fuel to the first inlet 114 of the jet pump 112 through the passage 172. Advantageously, the heat exchanger 170 cools the recirculated fuel eventually supplied to the inlet 124 of the primary pump 122, which reduces cavitation on the impeller of the centrifugal pump 122.

In particular, the pressure at the inlet 124 of the primary pump effects the life of the primary pump 122. By cooling the hydrogen fuel with a heat exchanger 170, the fuel system 100 may take advantage of the Joule-Thomson effect. The heat exchanger 170 may lower the temperature of the hydrogen fuel to allow further cooling of the hydrogen fuel upon expansion in the jet pump 112.

Further, by supplying the cooled fuel directly to the inlet of the jet pump 112, an increased net pressure is present at the primary pump 122 while adding pressure within the fuel tank 102 is avoided. However, the benefit of increased life of the primary pump 122 can be realized. Further, the addition of heated fuel is minimized the primary pump by utilizing the recirculated cooled fuel and fuel within the tank. Both of these benefits reduce the cavitation at the impeller of primary pump 122.

The propulsion system 190 may be an engine, multiple engines, a fuel cell or multiple fuel cells. For instance, the propulsion system 190 can be multiple engines or fuel cells for an aircraft. Advantageously, the fuel system 100 can increase the lifetime of the primary pumps 122 by minimizing the temperature of the fuel and increasing the pressure at the inlet of the primary pump and jet pumps. Conventional primary pumps have a low life cycle which make application in aircraft difficult.

In some examples, the at least one primary pump 122 may be a plurality of primary pumps 122. For instance, each primary pump 122 includes a check valve 128 within the outlet path 130, and the check valve 128 controls the flow rate of fuel recirculated to the hydrogen fuel tank 102. In some examples, the tank pressurization system 150 is fluidly connected to the first fuel recirculation path connected to the outlet path 130 at the check valve 128.

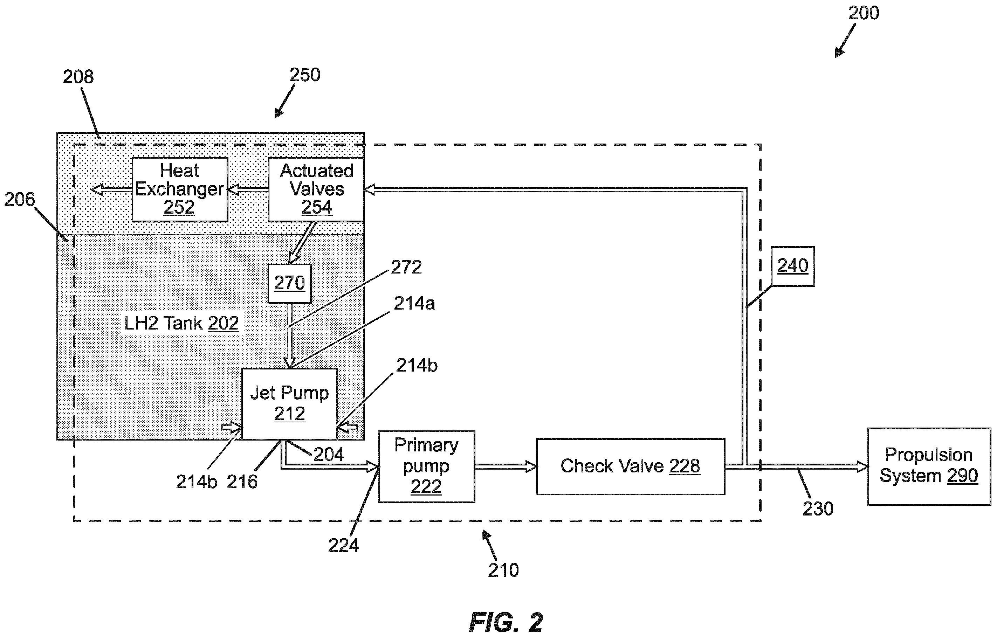

FIG. 2 is a schematic of an alternate embodiment of a fuel system 200 of the present disclosure. The fuel system 200 includes a hydrogen fuel tank 202 for fueling a propulsion system, a fuel feed system 210, a tank pressurization system 250 and a heat exchanger 270. In the example fuel system 200, the tank pressurization system 250 is part of the first fuel recirculation path. The first fuel recirculation path extending from the outlet path 230 to the inlet 214 of the jet pump 212. Further, the tank pressurization system 250 is integrated within the hydrogen fuel tank 202.

In the example fuel system 200, the tank pressurization system 250 includes a heat exchanger 252 and an actuator valve 254 controlling fuel flow to the heat exchanger 252 and the heat exchanger 270. The first fuel recirculation path 240 and tank pressurization system 250 are downstream of the check valve 228. The tank pressurization system 250 is positioned inside the hydrogen fuel tank 202 and receives fuel from the first fuel recirculation path 240. The actuator valve 254 selectively controls the flow of recirculated fuel to heat exchanger 252 and the heat exchanger 270 immersed in the liquid fuel of the fuel tank 202. For instance, the heat exchanger 252 and actuator valve 254 may be positioned within the tank 202 at the gas region 208. It is understood that the gas region 208 and a liquid region 206 may vary with the amount of liquid fuel in the tank. In some instances, portions of the heat exchanger 252 could contact the liquid region 206. The heat exchanger 252 adds the heated/vaporized fuel into to the gas region 208 and maintains pressure within the fuel tank 202. The actuator valve 254 controls the flow of fuel from the first fuel recirculation path and directs the fuel to the heat exchanger 270. As such, the heat exchanger 270 transfers heat from the fuel of the first recirculation path to the tank 202 and directs the cooled fuel to the inlet 214 of the jet pump 212 from the passage 272.

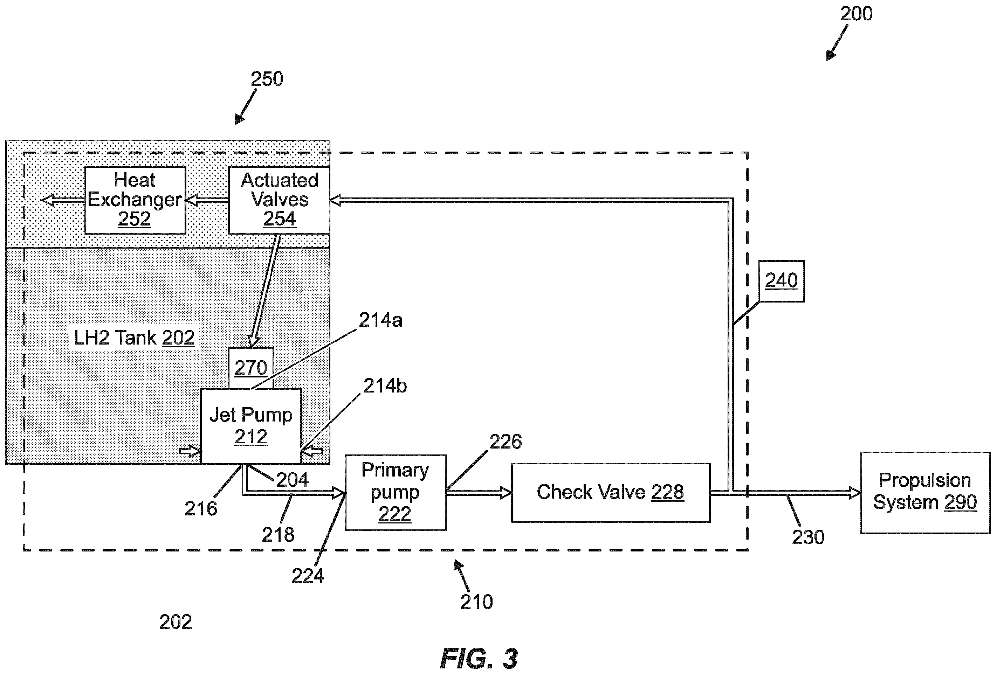

In some examples, the heat exchanger 270 may be directly positioned at the inlet 214 of the jet pump 212 without a passage 272. (See FIG. 3). In the example fuel system 200 illustrated in FIG. 2, the heat exchanger 270 is joined directly to the inlet 214 of the jet pump 212 to supply the cooled recirculated fuel to the primary pump 222.

Advantageously, the fuel system 200 can have a reduced weight by having a single fuel recirculation path. The single fuel recirculation path provides the benefit of adding pressure and cooled fuel to the primary pump 222 to improve the life of the pump.

Similar to the previous embodiment, the fuel system 200 may include a tank outlet 204, a jet pump outlet 216, a supply path 218, a primary pump inlet 224, and a primary pump outlet 226, a propulsion system 290.

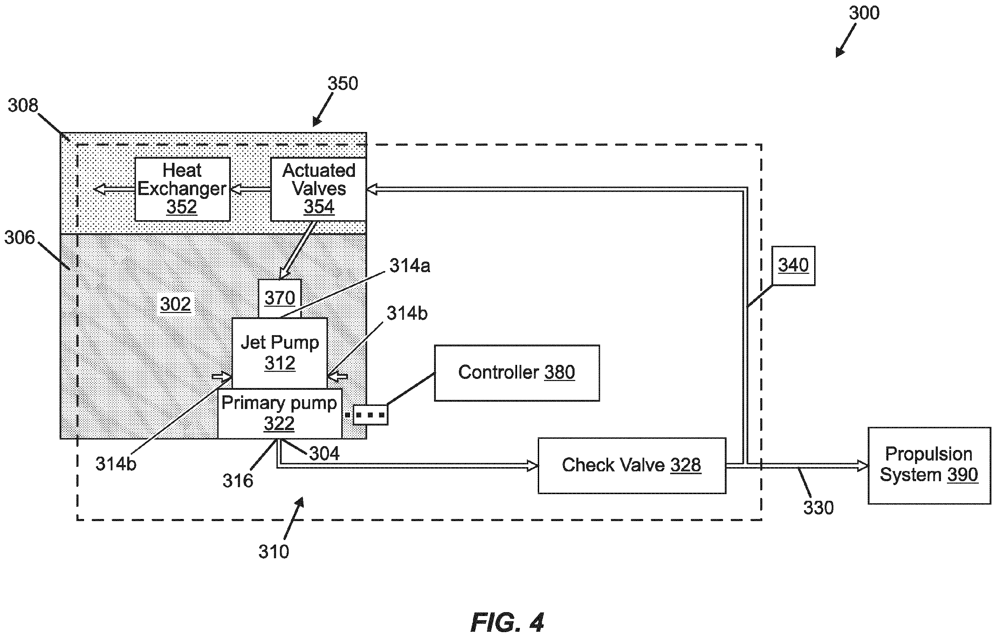

FIG. 4 is a schematic of an alternate embodiment of a fuel system 300 of the present disclosure. The fuel system 300 includes a hydrogen fuel tank 302 for fueling a propulsion system, a fuel feed system 310, a tank pressurization system 350 and a heat exchanger 370. The fuel system 300 includes a primary pump 322 integrated within the hydrogen fuel tank 302. In the example fuel system 300, the primary pump 322 is positioned between the tank outlet and jet pump 312 within the fuel tank 302. Further, the heat exchanger 370 may be directly attached to the jet pump 312.

In the example fuel system 300, the tank pressurization system 350 includes a heat exchanger 352 and an actuator valve 354 controlling fuel flow to the heat exchanger 352 and the heat exchanger 370. The first fuel recirculation path 340 and tank pressurization system 350 are downstream of the check valve 328. The tank pressurization system 350 is positioned inside the hydrogen fuel tank 302 and receives fuel from the first fuel recirculation path 340. In the example fuel system 300, the first fuel recirculation path 340 is fluidly connected from the output path 330 to the inlet 314a of the jet pump 312. For instance, the first recirculation path 340 passes from the output path 330 through the actuator valve 354 and heat exchanger 370 to the supply fuel to the inlet 314a of the jet pump 312. In the example fuel system 300, the primary pump 322 is also positioned within the tank 302. For instance, the outlet 326 of the primary pump 322 may be positioned at the tank outlet 304. The inlet 314a of the jet pump 312 may be directly connected with the heat exchanger and the outlet of the jet pump 312 may be directly joined with the primary pump inlet 324. The actuator valve 354 controls the flow of recirculated fuel to heat exchanger 352 and the heat exchanger 370 immersed in the liquid fuel of the fuel tank 302. For instance, the heat exchanger 352 and actuator valve 354 may be positioned within the tank 302 at the gas region 308. The heat exchanger 352 adds the vaporized fuel into to the gas region 306 and maintains pressure within the fuel tank 302. The actuator valve 354 controls the flow of fuel from the first fuel recirculation path and directs the fuel to the heat exchanger 370. As such, the heat exchanger 370 transfers heat from the fuel of the first recirculation path 340 to tank 302 and directs the cooled fuel to the inlet 312 of the jet pump 312.

A controller 380 is configured to operate the primary pump 322 and an actuator valve 354 of the tank pressurization system 350. The controller 380 may send electrical signals to control to turn on and off the primary pump 322. In other instances, the controller 380 may determine whether the actuator valve 354 supplies fuel to the heat exchanger 352, heat exchanger 370 or both, based on operating conditions, such as pump speed and fuel temperature.

Similar to the previous embodiments, the fuel system 300 may include a side inlet 314b, a jet pump outlet 316, a supply path 318, and a propulsion system 390.

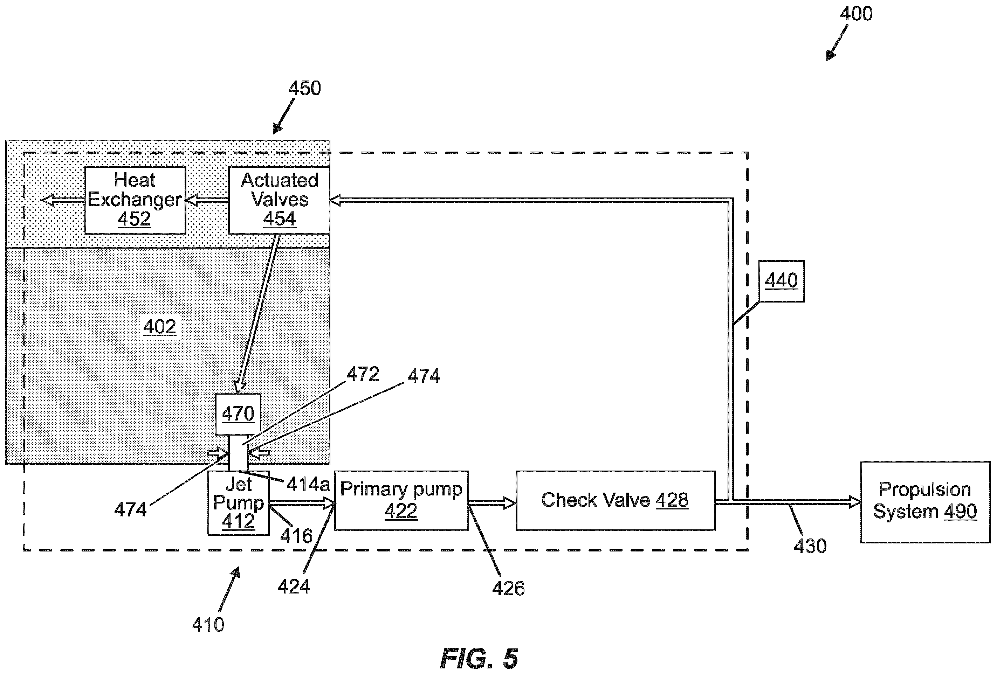

FIG. 5 is a schematic of a fuel system 400 of the present disclosure. The fuel system 400 includes a jet pump 412 positioned outside the fuel tank 410. The heat exchanger 470 may have a passage 472 with two side inlets 474 which receive fuel from the tank 402. The passage 472 passes through to the tank outlet 404 to connect to an inlet 414a of the jet pump 412. As such, the fuel is passed out the fuel tank outlet through the passage 472. The two side inlets 474 allow entry of fuel into the passage 472 connecting the heat exchanger 470 and the jet pump 412.

The heat exchanger 470 receives fuel from the actuator valve 454 on the first fuel recirculation path 440. The jet pump 412 receive fuel from the heat exchanger and received fuel from the two inlets of the passage 472. The tank pressurization system 450 may be positioned within the tank 402.

Similar to the previous embodiments, the fuel system 400 may include a jet pump outlet 416, a primary pump 422, a primary pump inlet 424, a primary pump outlet 426, an output path 430, a heat exchanger 452, and a propulsion system 490.

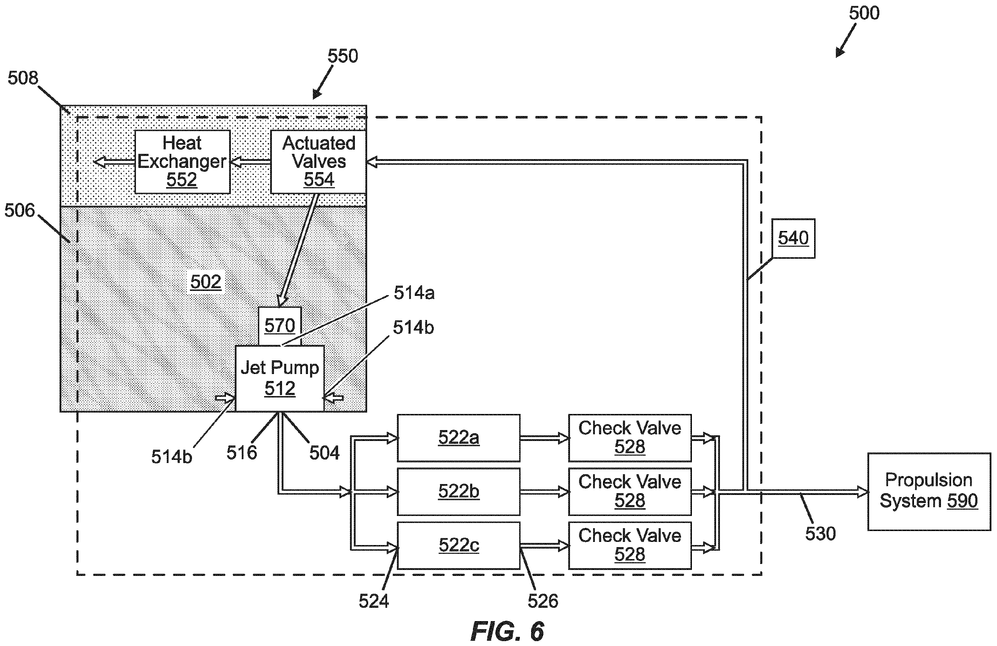

FIG. 6 is a schematic of a fuel system 500 of the present disclosure. In the fuel system 500, the at least one primary pump 522 may be a plurality of primary pumps 522a,b,c. For instance, each primary pump 522 includes a check valve 528 within the outlet path 530, and the check valve 528 controls the flow rate of fuel recirculated to the hydrogen fuel tank 502. In the example fuel system 500, the plurality of primary pumps are a first primary pump 522a, a second primary pump 522b, and a third primary pump 522c. The plurality of primary pumps 522a,b,c may all join to a single outlet path 530. As such, the plurality of pumps 522 a, b, c are fluidly connected to each other. It is possible that one of the plurality of pumps may operate while others are not operating. As such, each check valve 528 may further prevent the flow of fuel backwards to its respective primary pump when one of the other primary pumps 522 is operating. For instance, fuel from the primary pump 522a may be supplied to the outlet path 530, but cannot return through the respective check valves of primary pumps 522 b, c. Each of primary pumps 522 fluidly connect to outlet path 530. The first fuel recirculation path 540 passes through the actuator valve 554 and heat exchanger 570 to the inlet of the jet pump 515. The jet pump 512 is joined to the tank outlet 504. A supply path 518 connects the jet pump 512 to the primary pumps 522a, b, c and includes branches which connect to each of the primary pumps individually.

Similar to the previous embodiments, the fuel system 500 may include a liquid region 506, a gas region 508, a jet pump outlet 516, a primary pump inlet 524, a primary pump outlet 526, a tank pressurization system 550, and a heat exchanger 552.

Advantageously, the plurality of primary pumps can provide increased fuel flow to both a propulsion system 590 and/or the first fuel recirculation path 530. The increased pressure in the first fuel recirculation path 540 further increases the inlet pressure at the primary pump which is cooled by the heat exchanger. The increased pressure and the cooled hydrogen fuel may be further cooled by the Joule-Thomson effect when the hydrogen fuel expands in jet pump. Accordingly, cavitation may be reduced on the impeller of the primary pump and the life cycle of the pump may be improved.

The various embodiments described above are provided by way of illustration only and should not be construed to limit the claims attached hereto. Those skilled in the art will readily recognize various modifications and changes that may be made without following the example embodiments and applications illustrated and described herein, and without departing from the full scope of the following claims.

## Claims

1. A fuel system comprising
a hydrogen fuel tank for fueling a propulsion system;
a heat exchanger immersed within a liquid fuel in the hydrogen fuel tank;
a fuel feed system comprising:
a jet pump within the hydrogen fuel tank;
at least one primary pump receiving fuel from the jet pump and pressurizing fuel to an outlet path;
a first fuel recirculation path fluidly connected from the outlet path to an inlet of the jet pump, the first fuel recirculation path passes through the hydrogen fuel
tank and the heat exchanger to a first inlet of the jet pump; and
wherein the heat exchanger is configured to transfer heat from the fuel of the first fuel recirculation path to the hydrogen fuel tank and cool the fuel of the first fuel recirculation path, and wherein the first fuel recirculation path directly supplies the cooled fuel to the first inlet of the jet pump.

2. The fuel system of claim 1, wherein the at least one primary pump pumps fuel to the first fuel recirculation path and to the propulsion system, and wherein the first fuel recirculation path recirculates fuel and increases pressure at the inlet of the jet pump.

3. The fuel system of claim 1 or claim 2, wherein the heat exchanger immersed within the liquid fuel is directly joined to the inlet of the jet pump, wherein the heat exchanger immersed within the liquid fuel cools a recirculated fuel at the inlet of the at least one primary pump and reduces cavitation of the at least one primary pump.

4. The fuel system of any preceding claim, wherein the at least one primary pump includes a plurality of primary pumps, wherein each primary pump pumps fuel to a check valve within the outlet path, and wherein the check valve controls a flow rate of fuel recirculated to the hydrogen fuel tank.

5. The fuel system of any preceding claim, wherein the at least one primary pump includes a plurality of primary pumps, wherein each of the primary pumps fluidly connect to the outlet path and the first fuel recirculation path branches from the outlet path.

6. The fuel system of any preceding claim, wherein the first fuel recirculation path is connected to the outlet path which is connected to the at least one primary pump, the outlet path includes a check valve, and wherein the outlet path supplies fuel to the propulsion system and the first fuel recirculation path.

7. The fuel system of any preceding claim, further comprising a tank pressurization system configured to maintain pressure in the hydrogen fuel tank, and wherein the first fuel recirculation path and the tank pressurization system are downstream of a check valve.

8. The fuel system of claim 7, wherein the tank pressurization system is fluidly connected to the first fuel recirculation path or a second fuel recirculation path connected to the outlet path downstream of the check valve, and wherein the heat exchanger immersed in the liquid fuel is a first heat exchanger, wherein the tank pressurization system is connected to the second fuel recirculation path and wherein the tank pressurization system includes a second heat exchanger configured to add heated fuel as a vapor to the hydrogen fuel tank and an actuator valve controlling fuel flow to the second heat exchanger of tank pressurization system and the first heat exchanger.

9. The fuel system of claim 7 or claim 8, wherein the heat exchanger immersed in the liquid fuel is a first heat exchanger, wherein the tank pressurization system is connected to the first fuel recirculation path, and wherein the tank pressurization system includes a second heat exchanger configured to add heated fuel as a vapor to the hydrogen fuel tank and an actuator valve controlling fuel flow to the second heat exchanger of tank pressurization system and the first heat exchanger.

10. The fuel system of any preceding claim, further comprising a controller configured to operate the actuator valve and/or the at least one primary pump.

11. The fuel system of any preceding claim, wherein the jet pump includes at least one inlet receiving fuel directly from the hydrogen fuel tank, and wherein the inlet of the jet pump is joined to a tank outlet.

12. The fuel system of any preceding claim, wherein the at least one primary pump is positioned within the hydrogen fuel tank and connected to a tank outlet and wherein the at least one primary pump is positioned between the tank outlet and the jet pump.

13. The fuel system of any preceding claim, wherein the heat exchanger immersed within the liquid fuel includes a passage supplying cooled fuel to the inlet of the jet pump and wherein the passage includes at least one inlet receiving fuel from the first fuel recirculation path.

14. The fuel system of any preceding claim, wherein the fuel is cooled via the Joule-Thompson effect at the jet pump.

15. A tank pressurization system for a fuel system comprising:
a first heat exchanger configured to add pressure to a gas region of a hydrogen fuel tank;
a second heat exchanger immersed within liquid fuel in the hydrogen fuel tank;
an actuator valve receiving fuel from a fuel feed system, the actuator valve configured to control fuel received from a first fuel recirculation path to the first and second heat exchangers;
the fuel feed system comprising:
a jet pump within the hydrogen fuel tank;
at least one primary pump receiving fuel from the jet pump and pressurizing the fuel to an outlet path;
the first fuel recirculation path fluidly connected from the outlet path to an inlet of the jet pump, the first fuel recirculation path passes through the hydrogen fuel tank and the second heat exchanger to a first inlet of the jet pump; and
wherein the second heat exchanger immersed in the liquid fuel is configured to transfer heat from the fuel of the first fuel recirculation path to the hydrogen fuel tank and the first fuel recirculation path directly supplies the cooled fuel to the first inlet of the jet pump.
